# EUROPÄISCHE PATENTSCHRIFT

(11) **EP 2 982 285 B1**
(45) Veröffentlichungstag und Bekanntmachung des Hinweises auf die Patenterteilung: **19.12.2018**
(21) Anmeldenummer: 15178218.2
(22) Anmeldetag: 24.07.2015
(51) Int. Cl.: A47L 11/20, A47L 9/28, A47L 11/10, A47L 11/14, A47L 11/40

(54) **BODENREINIGUNGSGERÄT ZUR TROCKEN- UND FEUCHTREINIGUNG SOWIE VERFAHREN ZUM BETRIEB EINES SELBSTFAHRENDEN BODENREINIGUNGSGERÄTES**
FLOOR CLEANING DEVICE FOR DRY AND WET CLEANING AND METHOD FOR OPERATING A SELF-PROPELLED FLOOR CLEANING DEVICE
APPAREIL DE NETTOYAGE DE SOL DESTINE AU NETTOYAGE SEC ET HUMIDE ET PROCEDE DE FONCTIONNEMENT D'UN APPAREIL DE NETTOYAGE DE SOL AUTOMOBILE

(30) Priorität: 06.08.2014 DE 102014111217
(43) Veröffentlichungstag der Anmeldung: 10.02.2016
(73) Patentinhaber: Vorwerk & Co. Interholding GmbH, 42275 Wuppertal (DE)
(72) Erfinder: Hillen, Lorenz, 42287 Wuppertal (DE); Meggle, Martin, 33442 Herzebrock (DE); Scheffel, Jenny, 51105 Köln (DE); von der Heyden, Jan, 42499 Hückeswagen (DE); Eidmohammadi, Nazli, 41324 Göteborg (SE); Hoffmann, Sabrina, 42653 Solingen (DE)
(74) Vertreter: Müller, Enno

(56) Entgegenhaltungen:
- EP-A2- 2 741 483
- WO-A1-2005/055795
- US-A- 5 815 880

## Beschreibung

Die Erfindung betrifft ein Verfahren zum Betrieb eines selbstfahrenden Bodenreinigungsgerätes, wobei das Bodenreinigungsgerät in einem ersten Arbeitsschritt nach einer vorgegebenen oder gemäß einem vorgegebenen Algorithmus auf der Basis einer von mit Sensoren erfasster Daten berechneten Fahrstrategie einen ersten Bearbeitungsweg über den zu reinigenden Boden abfährt und dabei mit einer ersten Reinigungseinrichtung einen ersten Reinigungsschritt durchführt.

Verfahren zum Betrieb selbstfahrender Bodenreinigungsgeräte sind im Stand der Technik bekannt, bspw. offenbart die DE 102 42 257 A1 ein derartiges Verfahren.

Ein für ein solches Verfahren üblicherweise eingesetzter Reinigungsroboter besitzt eine Antriebseinheit, Sensoren zur Erfassung der Umgebung und eine Recheneinheit zur Verarbeitung und zur Erzeugung von Fahrtkommandos für den Antrieb. Die Recheneinheit ist eine programmierbare bzw. nach einem Programm arbeitende Steuereinrichtung, die in der Lage ist, sich in einem zu reinigenden Raum zu orientieren. Verfahren zur Orientierung eines Reinigungsroboters im Raum, zur Kartenbildung und zum Erstellen von Bearbeitungswegen auf zu reinigenden Bodenflächen sind aus der EP 2 471 426 A2, der DE 10 2010 000 174 A1, der DE 10 2009 059 217 A1, der DE 10 2010 015 941 A1, der DE 10 2010 016 553 A1 und der DE 10 2008 014 912 A1 bekannt. Weiter ist auf die EP 2 741 483 A2 und die WO 2005/ 055 795 A1 zu verweisen. Mit den bekannten Orientierungsverfahren, Verfahren zum Erkennen von Hindernissen oder Verfahren zum Erkennen von Oberflächeneigenschaften der zu reinigenden Bodenflächen und zur Bildung von Fahrwegen wird in einem ersten Arbeitsschritt mit einer ersten Reinigungseinrichtung ein erster Reinigungsschritt durchgeführt.

Im Stand der Technik ist es ferner bekannt, zwei voneinander verschiedene Reinigungsgeräte in zwei zeitlich aufeinander folgenden Arbeitsschritten zu verwenden. Mit dem ersten Reinigungsgerät wird in einem ersten Reinigungsschritt eine Trockenreinigung durchgeführt, bei der mittels einer Saugvorrichtung Staubpartikel von der zu reinigenden Bodenfläche abgesaugt werden. Mit einem zweiten Reinigungsgerät wird dann in einem zweiten Reinigungsschritt eine Feuchtreinigung durchgeführt, während derer der Boden befeuchtet, gewischt und Restfeuchtigkeit aufgesammelt wird.

Der Erfindung liegt die Aufgabe zugrunde, das eingangs genannte Verfahren gebrauchsvorteilhaft zu verbessern.

Gelöst wird die Aufgabe durch ein Verfahren gemäß Anspruch 1.

Im ersten Arbeitsschritt wird ein erster Arbeitsweg abgefahren. In diesem Arbeitsschritt kann das selbstfahrende Bodenreinigungsgerät bevorzugt den gesamten zu reinigenden Boden überfahren. Insbesondere mittels bordeigener Sensorelemente kann das Bodenreinigungsgerät während des ersten Arbeitsschrittes die Oberflächenqualität der Bodenflächen ermitteln. Aus den so gewonnenen Daten ist die Steuereinrichtung in der Lage, Bereiche der zu reinigenden Bodenflächen zu ermitteln, die in einem zweiten Arbeitsschritt gereinigt werden sollen. In dem zweiten Arbeitsschritt kommt eine zweite Reinigungseinrichtung zum Einsatz, die von der ersten Reinigungseinrichtung verschieden ist und die einen zweiten Reinigungsschritt durchführt, der vom ersten Reinigungsschritt verschieden ist.

Bevorzugt erfolgt im ersten Reinigungsschritt eine Trockenreinigung, in der ein mechanisches Reinigungsorgan, bspw. eine Bürste und ein Saugkanal verwendet werden. Mit der Bürste können Staubpartikel mechanisch vom Untergrund gelöst werden. Mit dem Saugkanal können die gelösten Staubpartikel in einen Staubsammelbehälter aufgesaugt werden.

Im zweiten Reinigungsschritt erfolgt bevorzugt eine Feuchtreinigung.

Die beiden Reinigungsschritte werden mit demselben Bodenreinigungsgerät durchgeführt, welches hierzu zwei Reinigungseinrichtungen aufweist, wobei mit der ersten Reinigungseinrichtung der erste Reinigungsschritt, bspw. der Trockenreinigungsschritt und mit der zweiten Reinigungseinrichtung der zweite Reinigungsschritt, bspw. der Feuchtreinigungsschritt durchgeführt wird. Der Feuchtreinigungsschritt ist bevorzugt ein Wischreinigungsschritt, bei dem Frischwasser über eine Befeuchtungseinrichtung auf die zu reinigende Oberfläche gebracht wird. Bevorzugt kann mit einer Wischvorrichtung mechanisch auf die zu reinigende Bodenoberfläche eingewirkt werden. Die Feuchtigkeit wird mit einem Saugmund abgesaugt. Das Schmutzwasser kann in einen Schmutzwasserbehälter geleitet werden.

In einer bevorzugten Ausgestaltung fährt das Bodenreinigungsgerät nach Beendigung des ersten Arbeitsschrittes eine Basisstation an, in der der Frischwasserbehälter mit Frischwasser befüllt wird und der Staubsammelbehälter gereinigt wird. Der Staubsammelbehälter kann während des zweiten Arbeitsschrittes als Schmutzwasserbehälter verwendet werden.

Währens des ersten Arbeitsschrittes erfolgt als Vorbereitung für den zweiten Arbeitsschritt eine Kartierung des vom Reinigungsroboter befahrenen Untergrunds. Der Untergrund wird dabei unter Zuhilfenahme der Sensoren in verschiedene Kategorien eingeteilt. Die Kategorien umfassend zumindest die Kategorie "Feucht zu reinigen" und "Nicht feucht zu reinigen". Es ist aber auch vorgesehen, dass der Untergrund in weitere Kategorien eingeteilt wird. Bspw. in verschiedene Arten der Feuchtreinigung oder zu verwendenden zusätzlichen Reinigungsmitteln.

Zur Unterscheidung der verschiedenen Bodentypen werden aus dem Stand der Technik bekannte Verfahren verwendet. Innerhalb eines Speichers der Steuerungseinrichtung werden Orientierungsdaten bspw. in Form einer Karte, in Form von Koordinaten oder in Form von Polygonzüge abgespeichert. Die Orientierungsdaten können geschlossene Gebiete kennzeichnen, in denen zusätzlich zum ersten Reinigungsschritt auch der zweite Reinigungsschritt durchgeführt werden soll, oder solche Gebiete, in denen der zweite Reinigungsschritt nicht durchgeführt werden soll. Die zu reinigende Bodenfläche kann die Bodenflächen von aneinander grenzenden, zu reinigenden Räume beinhalten. Es können Bodenflächen gesamter Räume oder aber auch nur Teile von Bodenflächen gesamter Räume kategorisiert werden. Bspw. kann das Bodenreinigungsgerät ganze Räume der Kategorie "Nicht feucht zu reinigen" zuordnen, wenn es bspw. ermittelt, dass der Boden des Raumes mit einem Teppichboden belegt ist.

Es ist aber auch vorgesehen, dass das Bodenreinigungsgerät auf einem ansonsten der Kategorie "Feucht zu reinigen" zugehörigen Boden einen Teppich erkennt und die Fläche des vom Teppich eingenommenen Bodenbereichs der Kategorie "Nicht feucht zu reinigen" zuordnet. Während des zweiten Arbeitsschrittes werden nur solche Räume angefahren, in denen zumindest ein Teilbereich der Kategorie "Feucht zu reinigen" zugeordnet ist. Die Bereiche "Nicht feucht zu reinigen" werden beim zweiten Arbeitsschritt ausgelassen.

Ein Bodenreinigungsgerät zur Durchführung des Verfahrens kann eine zweite Reinigungseinrichtung zur feuchten Reinigung des Bodens aufweisen. Die Die Reinigungseinrichtung weist Reinigungseinrichtungen für unterschiedliche Anforderungen auf. Die Aufgaben "Saugen" und "Wischen" können von einem einzigen Gerät erledigt werden. Die beiden Reinigungseinrichtungen sind dem Bodenreinigungsgerät derart zugeordnet, dass sie in unterschiedlichen Fahrtrichtungen ihren Aufgaben erfüllen.

So ist es bspw. möglich, in einem Saugmodus bspw. in einer Vorwärtsfahrt eine Bodenfläche zu bearbeiten und daran anschließend in einer Rückwärtsfahrt die Bodenfläche im Wischmodus zu reinigen. Dabei können die oben genannten Kenntnisse verwendet werden, die bei einer Trockenfahrt über die zu reinigenden Bodenflächen gesammelt werden. Die bei der Trockenreinigung gewonnenen Kenntnisse über die räumliche Anordnung der feucht zu wischenden Flächen kann zur Definition einer geeigneten Fahrstrategie genutzt werden.

In einer bevorzugten Weiterbildung ist ein Saugkanal der zweiten Reinigungseinrichtung an einem in Fahrtrichtung des Bodenreinigungsgerätes hinten liegenden Ende des Bodenreinigungsgerätes angeordnet. Dies hat den Vorteil, dass die feucht gereinigte Bodenoberfläche nicht von dem Laufwerk oder einer Bürstenanordnung des Reinigungsgerätes überfahren wird. Die Bürste des Reinigungsgerätes kann auch eine Wischfunktion ausüben.

Das Bodenreinigungsgerät kann bevorzugt in zwei entgegengesetzten Fahrtrichtungen betrieben werden. Es wird in einer ersten Fahrtrichtung zur Trockenreinigung betrieben. Bei dieser Betriebsart liegt der Saugkanal zum Aufsaugen des von einer Bürste mechanisch vom Untergrund gelösten Staubes hinter einem mechanischen Reinigungsorgan, bspw. einer Bürste. Das mechanische Reinigungsorgan kann dabei in Fahrtrichtung vor einem Fahrwerk angeordnet sein.

Die Vorrichtung besitzt einen Staubsammelbehälter, in den der durch den Saugkanal gesaugte Staub gesammelt werden kann. Zur Feuchtreinigung wird das Bodenreinigungsgerät in einer entgegengerichteten Fahrtrichtung betrieben.

Eine Befeuchtungseinrichtung kann dann in Fahrtrichtung vor dem mechanischen Reinigungsorgan oder einer Wischanordnung angeordnet sein.

In Fahrtrichtung nach der Bürste und nach dem Laufwerk befindet sich der Saugmund, mit dem die Feuchtigkeit vom Boden aufgesaugt werden kann. Dies kann mit Hilfe über den Boden gleitender Sauglippen des Saugmundes erfolgen.

Zur Erzielung der Saugwirkung besitzt die Vorrichtung ein Sauggebläse. Die erste und/ oder zweite Reinigungseinrichtung kann vertikal verfahrbar sein, um sie von einer aktiven Stellung in eine passive Stellung zu bringen.

Ein Ausführungsbeispiel der Erfindung wird nachfolgend anhand beigefügter Zeichnungen erläutert. Es zeigen:
- Figur 1:: Eine von sieben Raumböden gebildete zu reinigende Bodenoberfläche, wobei mit der strichpunktierten und der durchgezogenen Linie ein Fahrweg eines selbstfahrenden Bodenreinigungsgerätes dargestellt ist, entlang dessen das Bodenreinigungsgerät bei einer Trockenreinigung fährt, wobei die strichpunktierte Linie einen Fahrweg darstellt, entlang dessen das Bodenreinigungsgerät in einer anschließenden Feuchtreinigungsphase entlangfährt;
- Figur 2:: schematisch den Aufbau und die Fahrtrichtung eines Bodengerätes während des Trockenreinigens;
- Figur 3:: eine Darstellung gemäß Figur 1, wobei gestrichelt nur der Fahrweg eingezeichnet ist, den das Bodenreinigungsgerät in der Feuchtreinigungsphase nachfährt und
- Figur 4:: eine Darstellung gemäß Figur 2 jedoch in einer Fahrtrichtung des Feuchtreinigungsbetriebs.

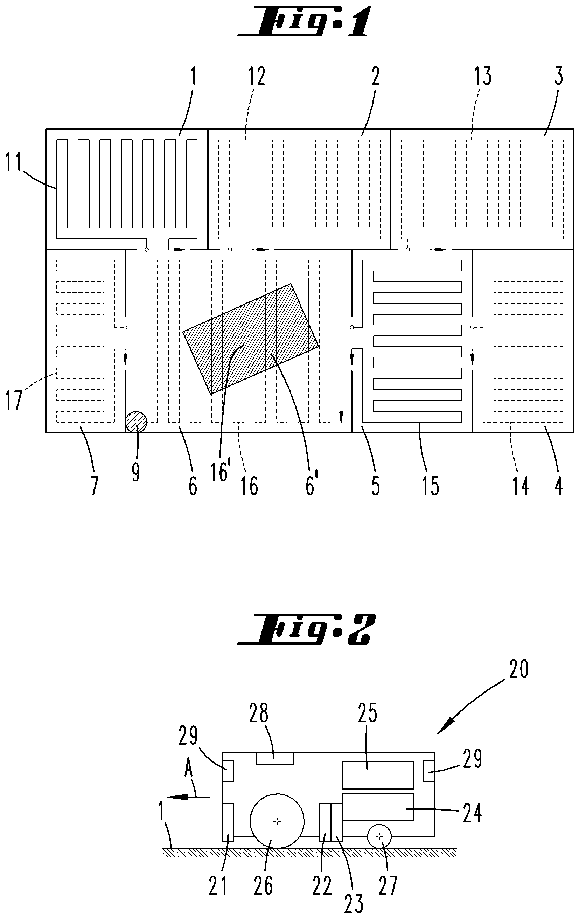

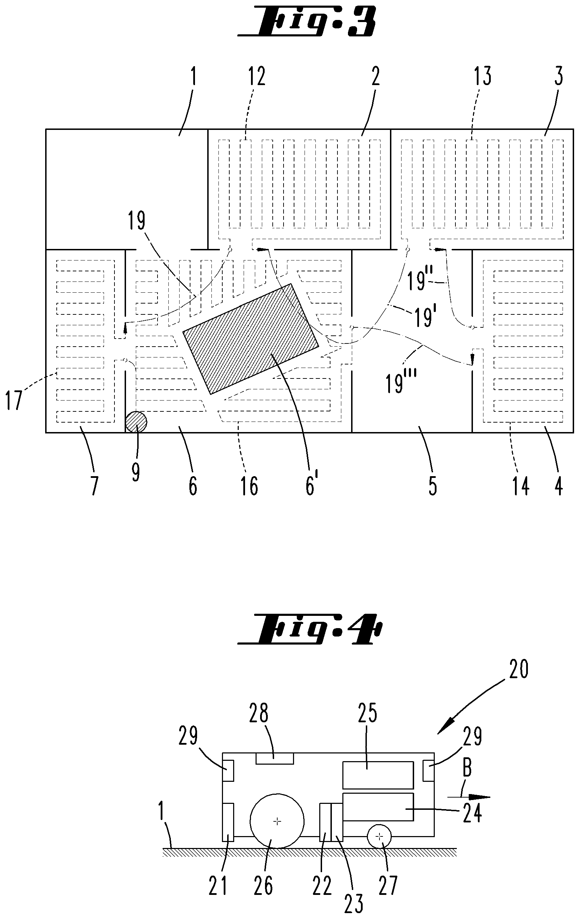

Die Figuren 2 und 4 zeigen rein schematisch den Aufbau eines selbstfahrenden Bodenreinigungsgerätes. Das Bodenreinigungsgerät arbeitet mit einer in den Figuren 1 und 3 mit 9 bezeichneten Basisstation zusammen. Die Basisstation ist in der Lage, Akkumulatoren des Reinigungsgerätes 20 aufzuladen, einen Frischwassertank 24 des Reinigungsgerätes 20 mit Frischwasser aufzufüllen und einen Sammelbehälter 25 zu entleeren. Der Sammelbehälter 25 kann als Sammelbehälter für Staub und als Sammelbehälter für Schmutzwasser verwendet werden.

Das selbstfahrende Bodenreinigungsgerät 20 besitzt Sensoren 29 und eine elektrische Steuereinrichtung 28, die über Speichermittel verfügt. In den Speichermitteln der Steuereinrichtung 28 sind ein Steuerprogramm und Orientierungsdaten gespeichert. Hinsichtlich der weiteren Ausgestaltung des Bodenreinigungsgerätes, dessen Orientierungsfähigkeit im Raum, dessen Möglichkeit Hindernisse und die Oberflächeneigenschaften von zu reinigenden Böden zu erkennen wird auf den einschlägigen Stand der Technik verwiesen. Insbesondere werden der Inhalt der DE 102 42 257 B1, DE 10 2008 014 912 A1, DE 10 2010 016 553 A1, DE 10 2010 015 941 A1, DE 10 2009 059 217 A1, DE 10 2010 000 174 A1 und EP 2 471 426 A1 voll inhaltlich mit in diese Anmeldung eingeschlossen, auch zum Zwecke, Merkmale dieser Patentanmeldungen in Ansprüche vorliegender Erfindung mit einzubeziehen.

Die in den Figuren 2 und 4 dargestellte Vorrichtung ist in der Lage, mithilfe eines Antriebsrades, welches ein Fahrwerk 27 ausbildet, in zwei einander entgegengerichtete Fahrtrichtungen A und B angetrieben zu werden. Das Fahrwerk 27 ist ebenfalls in der Lage, das Bearbeitungsgerät zu drehen und einen vorgegebenen Bearbeitungsweg abzufahren. Das Gerät orientiert sich im Raum mit den pauschal mit den Bezugsziffern 29 bezeichneten Sensorelementen, mit denen die Steuerungseinrichtung 28 zusammenwirkt. Die Sensorelemente 29 sind auch in der Lage, die Bodenbeschaffenheit des Bodens festzustellen und in Speichermitteln zu speichern.

Im unteren Bereich des Chassis des Bodenreinigungsgerätes 20 befinden sich ein Sauglippen aufweisender Saugmund 21, eine bspw. von einem Elektromotor drehantreibbare Bürste 26, ein Saugkanal 22, eine Befeuchtungseinrichtung 23 und das bereits erwähnte Fahrwerk 27. Innerhalb des Bodenreinigungsgerätes 20 befindet sich darüber hinaus eine Gebläseeinrichtung zur Erzeugung eines Saugstroms.

In einer ersten Betriebsart, die in der Figur 2 dargestellt ist, wird das Bodenreinigungsgerät in einer ersten Fahrtrichtung A angetrieben. In dieser Betriebsart findet eine Trockenreinigung statt, bei der mittels der Bürste 26 Staubpartikel vom Untergrund gelöst werden. Durch den Saugkanal 22 wird mittels des Gebläses eine Saugströmung erzeugt, die den gelösten Staub in einen Staubsammelbehälter 25 transportiert. In dieser Betriebsart befindet sich die Bürste 26 in Fahrtrichtung vor dem Saugkanal 23 und vor dem Fahrwerk 27.

Während dieses ersten Arbeitsschrittes fährt das Bodenreinigungsgerät 20 entlang der in den Figuren 1 strichpunktiert und durchgezogen dargestellten Bearbeitungswegen 11, 12, 13, 14, 15, 16, 16', 17 durch insgesamt sieben Räume mit Bodenflächen 1, 2, 3, 4, 5, 6, 7. Mithilfe der Sensorelemente 29 analysiert die Steuerungselektronik 28 die Bodenoberfläche. Gleichzeitig erfolgt mittels Bürste 26 und Saugkanal 22 die Trockenreinigung. Die Bearbeitung erfolgt bevorzugt systematisch entlang paralleler Bahnen. Die Bearbeitung kann aber auch unsystematisch entlang zufälliger Bahnen erfolgen.

Die Bodenfläche 1 des ersten Raumes wird, weil sie bspw. von den Sensoren als Teppichboden erkannt wird, der Kategorie "Nicht feucht zu reinigen" zugeordnet. Die Bodenflächen 2, 3, 4, 7 des zweiten, dritten, vierten und siebten Raumes werden, weil sie bspw. von der Sensoreinrichtung als Kunststoffböden erkannt werden, der Kategorie "Feucht zu reinigen" zugeordnet. Die Bodenfläche 5 des fünften Raumes wird, weil sie bspw. als empfindlicher Holzboden erkannt wird, der Kategorie "Nicht feucht zu reinigen" zugeordnet.

Im sechsten Raum erkennt die Bodenreinigungseinrichtung 20 auf ihrem Fahrweg 16 Bodenabschnitte 6, die der Kategorie "Feucht zu reinigen" zuzuordnen sind. Auf den Fahrwegsabschnitten 16' erkennt die Reinigungsvorrichtung 20 eine Bodenfläche 6', die der Kategorie "Nicht feucht zu reinigen" zuzuordnen ist. Bspw. weil die Sensoreinrichtung dort einen Teppich erkennt.

Nach Beendigung des ersten Arbeitsschrittes, in dem auf sämtlichen Bearbeitungswegen 11, 12, 13, 14, 15, 16, 16', 17 eine Trockenreinigung stattgefunden hat, fährt das Reinigungsgerät 20 die Basisstation 9 an. Dort wird der Staubsammelbehälter 25 geleert und der Frischwasserbehälter 24 mit Frischwasser befüllt.

Da dem Wischmodus eine der Bewegungsrichtung des Saugmodus entgegengesetzte Fahrtrichtung zugeordnet ist, ändert das Reinigungsgerät 20 jetzt seine Bewegungsrichtung. Es bewegt sich in Richtung des Pfeils B in der Figur 4, die der Bewegungsrichtung A beim Trockenreinigen entgegengerichtet ist. Es kommt jetzt eine zweite Reinigungseinrichtung zur Anwendung, die während des ersten Arbeitsschrittes passiv war. Die erste Reinigungseinrichtung, insbesondere der Saugkanal 22 ist jetzt passiv. Durch eine Befeuchtungseinrichtung 23, die zwischen Antriebsrad 27 und Saugkanal 22 liegt, wird die Bodenoberfläche befeuchtet. In Fahrtrichtung B hinter der Befeuchtungseinrichtung 23 befindet sich die Bürste 26. Diese kann während der Feuchtbearbeitung inaktiviert, d.h. angehoben werden. Sie kann aber auch als Wischvorrichtung arbeiten. Alternativ kann dort auch ein zusätzliches mechanisches Reinigungsaggregat vorgesehen sein, welches bei der Trockenreinigung inaktiviert ist und welches zur Feuchtreinigung abgesenkt ist.

In Fahrtrichtung B hinter dem Fahrwerk 27 und der Bürste 26 befindet sich ein Saugmund 21 zur Aufnahme der Feuchtigkeit. Der Saugmund kann über die Bodenfläche gleitende Sauglippen aufweisen. Der Saugmund 21 kann mit einem Saugkanal verbunden sein, mit dem die Gebläseeinrichtung einen Saugstrom erzeugt, sodass die Feuchtigkeit vom Boden 1 abgesaugt und im Sammelbehälter 25 gesammelt werden kann. Beim Ausführungsbeispiel erfolgt die Sammlung des Schmutzwassers im Staubsammelbehälter. Es findet somit eine Doppelnutzung des Sammelbehälters 25 statt. Dem Saugmund 21 kann örtlich auch eine Wischvorrichtung zugeordnet sein, sodass die Bürste 26 keine Wischfunktion zu übernehmen braucht.

Während des zweiten Arbeitsschrittes fährt das Bodenreinigungsgerät die in Figur 3 dargestellten Bearbeitungswege 12, 13, 14, 16 und 17 ab. Dabei werden die Bodenflächen 2, 3, 4, 5, 6 und 7 vollständig feucht gereinigt. Die Transferwege von Raum zu Raum sind mit den Bezugsziffern 19, 19', 19" und 19'" als punktierte Linien verdeutlicht.

Der Bereich der Bodenfläche 6' der im sechsten Raum als Teppich erkannt worden ist, wird bei der Feuchtreinigung ausgespart. Während des Feuchtreinigungsmodus fährt der das Bodenreinigungsgerät 20 ausbildende Roboter also gezielt nur die Bereiche an, die bei der zuvorigen Trockenreinigung als "Feucht zu reinigen" kategorisiert worden sind. Die Bereiche der Bodenoberfläche, die bei der Trockenreinigung der Kategorie "Nicht feucht zu reinigen" zugeordnet sind, werden vom Fahrweg des Bodenreinigungsgerätes ausgespart. Das Bodenreinigungsgerät kann die ausgesparten Gebiete entweder umfahren oder überfahren. Das Bodenreinigungsgerät ist dann in der Lage, in einen dritten Betriebszustand, einem "Überfahrmodus" zu gehen, indem es weder trocken reinigt, noch feucht reinigt.

Da sich beim Reinigungsgerät die Feuchtreinigungseinheit 21 in Fahrtrichtung am Ende des Gehäuses des Bodenreinigungsgerätes 20 befindet, wird die feucht gereinigte Bodenoberfläche beim Reinigen nicht von der Bürste 26 oder vom Fahrwerk 27 überfahren. Die Steuerung des Bodenreinigungsgerätes 20 erfolgt während des Feuchtreinigens, darüber hinaus derart, dass bereits feucht gereinigte Bodenoberflächen nicht noch einmal überfahren werden. So werden die Transferwege 19, 19', 19", 19'" von der Steuereinrichtung 28 beim Berechnen des Bearbeitungsweges zur Feuchtreinigung so gewählt, dass sie durch Gebiete verlaufen, die später feucht gereinigt werden. Dies erfolgt allerdings nur bezogen auf die Bodenflächen, die feucht gereinigt werden sollen.

Zum Ende des zweiten Bearbeitungsschrittes erreicht das Bodenreinigungsgerät die Basisstation 9, wo der Schmutzwassertank entleert wird.

Es wird als besonders vorteilhaft angesehen, dass das Bodenreinigungsgerät 2 voneinander verschiedene Reinigungseinrichtungen aufweist, die in unterschiedlichen Fahrtrichtungen des Bodenreinigungsgerätes 20 betrieben werden können. Die Erfindung schlägt somit einen Saug- und Wischroboter in einem Gerät vor. Der Wartungsaufwand hat sich somit vermindert. Das Gerät kann mit einer einfach gestalteten Basisstation 9 zusammenwirken, die in der Lage ist, das Bodenreinigungsgerät 20 zu versorgen und Schmutzwasser bzw. Staub zu entsorgen. Der kombinierte Staub-, Schmutzwasser-, Sammelbehälter 25 kann, da er doppelt verwendet wird, relativ groß gestaltet werden. Hierdurch ergeben sich vergleichsweise lange Reinigungszeiten. Das Gerät ermöglicht es im "Überfahrmodus" gezielt Stellen eines zu reinigenden Raumes anzufahren, die feucht zu reinigen sind.

Da die Bürste 26 zwischen Befeuchtungseinrichtung 23 und Saugmund 21 aber auch bezogen auf die Fahrtrichtung beim Trockenreinigen vor dem Saugkanal 22 angeordnet ist, kann sie ebenfalls doppelt verwendet werden. Sie kann beim Feuchtreinigen und beim Trockenreinigen benutzt werden.

Das Bodenreinigungsgerät kann eine rechteckige oder D-förmige Grundfläche aufweisen. Das Feuchtreinigungsaggregat 21, 23 erstreckt sich ebenso wie das Trockenreinigungsaggregat 26, 22 über die gesamte Fahrzeugbreite.

Das Trockenreinigungsaggregat 26, 22 und das Feuchtreinigungsaggregat 21, 23 können in vertikaler Richtung angehoben werden. Es ist somit insbesondere vorgesehen, dass der Saugmund 21 und daran befestigte Sauglippen, der Saugkanal 22, die Befeuchtungseinrichtung 23 und die Bürste 26 in Vertikalrichtung angehoben werden können. Dies erfolgt mit geeigneten motorischen Antrieben. Ein vertikales Anheben ist insbesondere für den "Überfahrmodus" vorgesehen.

Die vorstehenden Ausführungen dienen der Erläuterung der von der Anmeldung insgesamt erfassten Erfindungen, die den Stand der Technik zumindest durch die folgenden Merkmalskombinationen jeweils eigenständig weiterbilden, nämlich:
Ein Verfahren, das dadurch gekennzeichnet ist, dass im ersten Arbeitsschritt Bereiche der zu reinigenden Bodenflächen 1, 2, 3, 4, 5, 6, 6', 7 ermittelt werden, die in mindestens einem zweiten Arbeitsschritt mit einer zweiten Reinigungseinrichtung 21, 23, 24 gereinigt werden oder von der Reinigung mit der zweiten Reinigungseinrichtung 21, 23, 24 ausgeschlossen werden;
Ein Bodenreinigungsgerät, das gekennzeichnet ist durch eine zweite Reinigungseinrichtung 21, 23, 24 zur feuchten Reinigung von Bereichen 2, 3, 4, 6 und 7 der Bodenfläche 1, 2, 3, 4, 5, 6, 6', 7;
Ein Bodenreinigungsgerät, das dadurch gekennzeichnet ist, dass die erste Reinigungseinrichtung ein mechanisches Reinigungsorgan, insbesondere eine Bürste 26 und einen dem mechanischen Reinigungsorgan in einer ersten Fahrtrichtung A des Reinigungsgerätes 20 nachgeordneten Saugkanal 22 aufweist, und die zweite Reinigungseinrichtung einen Saugmund 21 zum Absaugen einer auf die zu reinigende Bodenfläche aufgebrachte Feuchtigkeit aufweist, wobei der Saugmund 21 in einer der ersten Fahrtrichtung A entgegengerichteten zweiten Fahrtrichtung B des Reinigungsgerätes 20 hinter dem mechanischen Reinigungsorgan und hinter dem Fahrwerk 27 angeordnet ist;
Ein Bodenreinigungsgerät, das dadurch gekennzeichnet ist, dass das Bodenreinigungsgerät 20 eine mit Sensorelementen 29 zusammenwirkende Steuereinrichtung 28 aufweist, um nach einer vorgegebenen oder gemäß einem vorgegebenen Algorithmus auf der Basis einer von mit Sensoren 29 erfasster Daten berechneten Fahrtstrategie einen Bearbeitungsweg 11, 12, 13, 14, 15, 16, 16', 17 auf der zu reinigenden Bodenfläche 1, 2, 3, 4, 5, 6, 6', 7 abzufahren;
Ein Bodenreinigungsgerät, das dadurch gekennzeichnet ist, dass der Saugmund 21 bezogen auf die zweite Fahrtrichtung B am Ende des Bodenreinigungsgerätes 20 angeordnet ist;
Ein Bodenreinigungsgerät, das dadurch gekennzeichnet ist, dass der Saugkanal 22 und eine Befeuchtungseinrichtung 23 zwischen einem vom Fahrwerk gebildeten Antriebsrad 27 und einer insbesondere drehangetriebenen Bürste 26 angeordnet sind;
Ein Bodenreinigungsgerät, das dadurch gekennzeichnet ist, dass das Bodenreinigungsgerät 20 einen Frischwassertank 24, einen Sammelbehälter 25 für Staub und Schmutzwasser aufweist;
Ein Bodenreinigungsgerät, das dadurch gekennzeichnet ist, dass die erste Reinigungseinrichtung 22, 26 und/oder die zweite Reinigungseinrichtung 21, 23, 24 in Vertikalrichtung von einer aktiven Stellung in eine passive Stellung verlagerbar ist;
Ein selbstfahrendes Bodenreinigungsgerät, das dadurch gekennzeichnet ist, dass im ersten Arbeitsschritt Bereiche der zu reinigenden Bodenflächen 1, 2, 3, 4, 5, 6, 6', 7 ermittelt werden, die in mindestens einem zweiten Arbeitsschritt mit einer zweiten Reinigungseinrichtung 21, 23, 24 gereinigt werden oder von der Reinigung mit der zweiten Reinigungseinrichtung 21, 23, 24 ausgeschlossen werden;
Ein Verfahren, das dadurch gekennzeichnet ist, dass im ersten Arbeitsschritt eine Trockenreinigung und im zweiten Arbeitsschritt eine Feuchtreinigung durchgeführt wird, wobei im zweiten Arbeitsschritt nur die während des ersten Arbeitsschrittes ermittelten Bereiche 2, 3, 6, 7 gereinigt werden;
Ein Verfahren, das dadurch gekennzeichnet ist, dass der Staubsammelbehälter 25 bei der Trockenreinigung Staubsammelbehälter und bei der Feuchtreinigung als Schmutzwasserbehälter verwendet wird;
Ein Verfahren, das dadurch gekennzeichnet ist, dass der zweite Arbeitsschritt nach einer Entleerung des Staubbehälters 25 und einer Befüllung des Frischwassertanks 24 an einer Basisstation 9 erfolgt.

**Bezugszeichenliste:**

| | | | |
|---|---|---|---|
| 1 | Bodenfläche | 26 | Bürste |
| 2 | Bodenfläche | 27 | Antriebsrad |
| 3 | Bodenfläche | 28 | Steuerungselektronik |
| 4 | Bodenfläche | 29 | Sensorelemente |
| 5 | Bodenfläche | | |
| 6 | Bodenfläche | A | Fahrtrichtung |
| 6' | Bodenfläche | B | Fahrtrichtung |
| 7 | Bodenfläche | | |
| 8 | Bodenfläche | | |
| 9 | Basisstation | | |
| | | | |
| 11 | Bearbeitungsweg/Fahrweg | | |
| 12 | Bearbeitungsweg/Fahrweg | | |
| 13 | Bearbeitungsweg/Fahrweg | | |
| 14 | Bearbeitungsweg/Fahrweg | | |
| 15 | Bearbeitungsweg/Fahrweg | | |
| 16 | Bearbeitungsweg/Fahrweg | | |
| 16' | Bearbeitungsweg/Fahrweg | | |
| 17 | Bearbeitungsweg/Fahrweg | | |
| 18 | Bearbeitungsweg/Fahrweg | | |
| 19 | Transferweg | | |
| 20 | Bodenreinigungsgerät | | |
| 21 | Saugmund | | |
| 22 | Saugkanal (Staub) | | |
| 23 | Befeuchtungseinrichtung | | |
| 24 | Frischwassertank | | |
| 25 | Staubsammelbehälter | | |

## Patentansprüche

1. Verfahren zum Betrieb eines selbstfahrenden Bodenreinigungsgerätes (20), wobei das Bodenreinigungsgerät (20) in einem ersten Arbeitsschritt nach einer vorgegebenen oder gemäß einem vorgegebenen Algorithmus auf der Basis einer von mit Sensoren (29) erfasster Daten berechneten Fahrstrategie einen ersten Bearbeitungsweg (11, 12, 13, 14, 15, 16, 16', 17) über den zu reinigenden Boden (1, 2, 3, 4, 5, 6, 6', 7) abfährt und dabei mit einer ersten Reinigungseinrichtung (22, 26) einen ersten Reinigungsschritt durchführt, **dadurch gekennzeichnet, dass** im ersten Arbeitsschritt Bereiche der zu reinigenden Bodenflächen (1, 2, 3, 4, 5, 6, 6', 7) ermittelt werden, die in mindestens einem zweiten Arbeitsschritt mit einer zweiten Reinigungseinrichtung (21, 23, 24) gereinigt werden oder von der Reinigung mit der zweiten Reinigungseinrichtung (21, 23, 24) ausgeschlossen werden.

2. Verfahren gemäß Anspruch 1, **dadurch gekennzeichnet, dass** in dem ersten Arbeitsschritt eine Trockenreinigung und in dem zweiten Arbeitsschritt eine Feuchtreinigung durchgeführt wird, wobei in dem zweiten Arbeitsschritt nur die während des ersten Arbeitsschrittes ermittelten Bereiche (2, 3, 6, 7) gereinigt werden.

3. Verfahren nach Anspruch 1 oder 2, **dadurch gekennzeichnet, dass** der Staubsammelbehälter (25) bei der Trockenreinigung als Staubsammelbehälter und bei der Feuchtreinigung als Schmutzwasserbehälter verwendet wird.

4. Verfahren nach einem der Ansprüche 2 oder 3, **dadurch gekennzeichnet, dass** der zweite Arbeitsschritt nach einer Entleerung des Staubbehälters (25) und einer Befüllung des Frischwassertanks (24) an einer Basisstation (9) erfolgt.

## Claims

1. A method for operating a self-propelled floor cleaning device (20), wherein, in a first operating step, the floor cleaning device (20) drives across the floor (1, 2, 3, 4, 5, 6, 6', 7), which is to be cleaned, according to a predetermined driving strategy, or according to a predetermined algorithm, which is calculated on the basis of data, which are detected by means of sensors (29) and thereby carries out a first cleaning step by means of a first cleaning device (22, 26), **characterized in that**, in the first operating step, areas of the floor surfaces (1, 2, 3, 4, 5, 6, 6', 7), which are to be cleaned, which are cleaned in at least a second operating step by means of a second cleaning device (21, 23, 24), or which are excluded from the cleaning by means of the second cleaning device (21, 23, 24).

2. The method according to claim 1, **characterized in that** a dry cleaning is carried out in the first operating step and a wet cleaning is carried out in the second operating step, wherein only the areas (2, 3, 6, 7), which are determined during the first operating step, are cleaned in the second operating step.

3. The method according to claim 1 or 2, **characterized in that** the dust collection container (25) is used as dust collection container during the dry cleaning and as dirty water container during the wet cleaning.

4. The method according to one of claims 2 or 3, **characterized in that** the second operating step takes place at a base station (9) after the dust container (25) is emptied and after the fresh water tank (24) is filled.

## Revendications

1. Procédé pour faire fonctionner un dispositif de nettoyage de sol automoteur (20), dans lequel le dispositif de nettoyage de sol (20), dans une première étape de travail, se déplace sur un premier trajet de travail (11, 12, 13, 14, 15, 16, 16, 16', 17) sur le sol à nettoyer (1, 2, 3, 4, 5, 6, 6, 6',7) selon un algorithme prédéterminé ou conformément à un algorithme prédéterminé sur la base d'une stratégie de déplacement calculée à partir de données déterminées par des capteurs (29), et effectue ainsi une première étape de nettoyage avec un premier dispositif de nettoyage (22, 26), **caractérisé en ce que** dans la première étape de travail sont déterminées des zones des surfaces de sol à nettoyer (1, 2, 3, 4, 5, 6, 6, 6', 7) qui sont nettoyées dans au moins une deuxième étape de travail avec un deuxième dispositif de nettoyage (21, 23, 24) ou qui sont exclues du nettoyage avec le deuxième dispositif de nettoyage (21, 23, 24).

2. Procédé selon la revendication 1, **caractérisé en ce que** sont effectués un nettoyage à sec dans la première étape de travail et un nettoyage humide dans la deuxième étape de travail, dans lequel seules les zones (2, 3, 6, 7) déterminées pendant la première étape de travail sont nettoyées dans la deuxième étape.

3. Procédé selon la revendication 1 ou 2, **caractérisé en ce que** le récipient collecteur de poussière (25) est utilisé comme récipient collecteur de poussière pendant le nettoyage à sec et comme récipient à eau sale pendant le nettoyage humide.

4. Procédé selon l'une des revendications 2 ou 3, **caractérisé en ce que** la deuxième étape de travail a lieu après un vidage du réservoir à poussière (25) et un remplissage du réservoir d'eau propre (24) à une station de base (9).
